# FASCICULE DE BREVET EUROPEEN

(11) **EP 2 743 175 B1**
(45) Date de publication et mention de la délivrance du brevet: **04.03.2015**
(21) Numéro de dépôt: 13196664.0
(22) Date de dépôt: 11.12.2013
(51) Int. Cl.: B64C 1/36, B64C 1/10

(54) **Fond étanche avant d'aéronef comprenant des renfoncements pour le logement d'équipements de cockpit et son procédé de fabrication**
Vordere abgedichtete Trennwand eines Luftfahrzeuges, welche Ausparungen für die Aufnahme der Cockpit-Geräte umfasst und ihr Herstellungsverfahren
Sealed forward bulkhead of an aircraft including recesses for housing cockpit equipment and its fabrication method

(30) Priorité: 17.12.2012 FR 1262144
(43) Date de publication de la demande: 18.06.2014
(73) Titulaire: Airbus Opérations SAS, 31060 Toulouse (FR)
(72) Inventeur: Durand, Yves, 31840 AUSSONNE (FR); Guering, Bernard, 31850 MONTRABE (FR)
(74) Mandataire: Ilgart, Jean-Christophe

(56) Documents cités:
- FR-A1- 2 910 875
- US-A1- 2007 164 152
- US-A1- 2008 149 769

## Description

### DOMAINE TECHNIQUE

La présente invention concerne une partie avant d'aéronef, également dénommée pointe avant.

L'invention s'applique à tous les types d'aéronefs, en particulier ceux dits à pare-brise intégré, dans lesquels le pare-brise s'intègre dans le profil aérodynamique du cockpit.

### ETAT DE LA TECHNIQUE ANTERIEURE

La pointe avant des aéronefs a fait l'objet de nombreux développements visant à optimiser sa masse, son volume, son coût, sa sécurité, sa facilité de fabrication, de maintenance, etc. Une telle pointe avant est par exemple connue des documents FR 2 910 875, qui est regardé comme l'art antérieur le plus proche, et US 7 784 736.

La partie avant d'un aéronef constitue un environnement complexe dans lequel les éléments sont très compactés, afin de présenter un encombrement le plus faible possible. Au coeur de cet environnement, se trouve le fond étanche avant dont l'une des fonctions est de former un élément structural permettant de résister aux chocs, en particulier aux chocs de volatiles. Ce fond étanche crée une barrière entre la zone pressurisée arrière, et la zone de radôme avant non pressurisée. Le fond étanche a en tant que tel déjà fait l'objet de nombreux développements pour répondre aux contraintes de masse et d'encombrement. Ces développements ont par exemple conduit, pour une pointe avant à pare-brise intégré, à un fond étanche à section en forme globale de V ouvert vers l'avant.

Néanmoins, il existe un besoin de réduire encore davantage l'encombrement global de la pointe avant des aéronefs.

### EXPOSÉ DE l'INVENTION

L'invention a donc pour but de remédier au moins partiellement à l'inconvénient mentionné ci-dessus, relatif aux réalisations de l'art antérieur.

Pour ce faire, l'invention a tout d'abord pour objet un fond étanche avant pour aéronef présentant un premier côté orienté vers une zone de radôme destinée à loger une antenne mobile, ainsi qu'un second côté opposé au premier côté et orienté vers un cockpit de l'aéronef, caractérisé en ce que ledit second côté présente au moins un renfoncement destiné à recevoir au moins un équipement de cockpit, chaque renfoncement étant en partie délimité par une structure de fond formant excroissance sur ledit premier côté.

L'invention est remarquable en ce qu'elle permet de loger un ou plusieurs équipements de cockpit dans le/les renfoncements du fond étanche avant. Ces renfoncements ont pour conséquence de créer des excroissances dans des parties de la zone de radôme qui ne sont pas balayées par l'antenne mobile. En d'autres termes, l'invention propose d'utiliser ces parties de la zone de radôme jusqu'à présent inexploitées, dans lesquelles les équipements peuvent être logés.

Ainsi, les équipements placés dans les renfoncements propres à la présente invention sont avancés par rapport à leur positionnement occupé avec un fond étanche de conception classique, tout en conservant la position de ce même fond étanche au sein de la pointe avant. De ce fait, c'est au moins une partie des autres équipements de cockpit qui peuvent être avancés, avec pour conséquence une réduction de la longueur totale de la partie avant. En effet, la cloison séparant le cockpit de la partie arrière, dite partie cabine pour les avions commerciaux, peut être avancée grâce à l'invention. Cela a pour avantage une réduction de la longueur totale de l'aéronef avec pour conséquence une réduction de masse, et/ou une augmentation de la longueur de la partie cabine, avec pour conséquence une meilleure rentabilité de l'aéronef.

De préférence, le fond étanche comprend une peau ainsi qu'une pluralité de raidisseurs équipant ladite peau au niveau du second côté. De plus, ledit renfoncement est au moins en partie formé dans la hauteur des raidisseurs. Cela est par exemple possible en interrompant un ou plusieurs raidisseurs, le renfoncement se trouvant alors au moins en partie dans la zone découpée/évidée des raidisseurs.

Dans ce cas de figure, il est préférentiellement fait en sorte que le renfoncement présente une structure latérale à partir de laquelle s'étendent, extérieurement au renfoncement, une pluralité desdits raidisseurs.

De préférence, ladite structure de fond présente des raidisseurs additionnels au niveau dudit premier côté. Ces raidisseurs additionnels permettent ainsi de pallier à l'affaiblissement de la résistance mécanique observée au niveau des raidisseurs interrompus, présents sur le second côté du fond étanche. L'excroissance formée sur le premier côté est alors au moins en partie réalisée par ces raidisseurs additionnels. Il s'agit ici d'une réalisation dite à « maille inversée », en raison de la mise en place locale de raidisseurs additionnels sur le côté opposé à celui sur lequel sont agencés les raidisseurs principaux.

De préférence, lesdits raidisseurs additionnels sont agencés sur une peau dudit fond étanche, lesdits raidisseurs additionnels étant préférentiellement les seuls raidisseurs équipant la peau au niveau du premier côté.

Selon un premier mode de réalisation préféré de l'invention, ladite structure de fond définit une surface de fond avec une peau du fond étanche. Dans cette configuration, la profondeur du renfoncement correspond alors à la hauteur des raidisseurs interrompus.

Selon un second mode de réalisation préféré de l'invention, le fond présente une trouée dans laquelle est logé un module formant au moins en partie ladite structure de fond du renfoncement. Cela permet de disposer d'un renfoncement avec une plus grande profondeur que celle délimitée par la peau de fond étanche du premier mode de réalisation. En outre, cette profondeur peut être variable, en fonction de l'espace disponible dans la zone de radôme. Par ailleurs, ces trouées peuvent avantageusement servir de trappes d'accès aux opérateurs lors de la fabrication de la partie avant, et/ou lors d'opérations de maintenance après le retrait du module.

De préférence, comme évoqué ci-dessus, ledit module définit une surface de fond au moins en partie décalée d'une peau de fond étanche, en direction dudit premier côté. Cela permet de déporter les équipements de cockpit encore plus vers l'avant, pour un gain maximal en termes de réduction de masse et/ou d'augmentation de la longueur de cabine.

De préférence, pour faciliter le montage, ledit module porte ledit équipement de cockpit. De plus, le module peut incorporer d'autres éléments comme un habillage, une protection isotherme, etc.

De préférence, ledit équipement de cockpit est un système de palonnier de commande, manuel ou électronique. De manière conventionnelle, par système de palonnier de commande, il est entendu une commande de vol par laquelle le pilote ou le copilote agit sur les gouvernes de direction et peut opérer une rotation de l'aéronef autour de son axe de lacet. Le palonnier comprend habituellement des pédales actionnées avec les deux pieds. Il peut néanmoins s'agir de tout autre équipement de cockpit situé à proximité du fond étanche avant, sans sortir du cadre de l'invention.

De préférence, le fond étanche présente deux renfoncements destinés à se situer en regard respectivement de deux sièges de cockpit, en particulier lorsque les équipements à loger sont des systèmes de palonnier de commande.

L'invention a également pour objet un procédé de fabrication d'un fond étanche avant d'aéronef tel que décrit ci-dessus, au moins une partie dudit équipement de cockpit étant assemblé sur ledit module avant que ce dernier soit logé dans ladite trouée. Comme indiqué précédemment, cela permet de faciliter le procédé de fabrication du fond étanche, puisque le module se trouve automatiquement assemblé par l'assemblage du module dans sa trouée.

L'invention a également pour objet une partie avant d'aéronef comprenant un fond étanche avant tel que décrit ci-dessus, celui-ci ayant son premier côté recouvert par un bouclier de protection, présentant de préférence également une excroissance superposée à l'excroissance définie par la structure de fond du renfoncement. Ici encore, ce sont les zones de la partie radôme non balayées par le radar qui servent avantageusement à la mise en place des excroissances du bouclier de protection, pour une optimisation encore plus poussée de l'encombrement global de la partie avant.

De préférence, ledit fond étanche prend en section la forme globale d'un V ouvert vers l'avant, dont les extrémités sont de préférence fixées au fuselage de la partie avant, et dont la pointe orientée vers l'arrière est fixée à une extrémité avant d'un plancher de cockpit. La forme globale en V ouvert vers l'avant favorise la présence de parties étendues inexploitées dans la zone de radôme à proximité du fond étanche avant. Par conséquent, les renfoncements peuvent être profonds, et les équipements de cockpit encore plus avancés en étant logés dans ces renfoncements du fond étanche.

Il est indiqué que ladite antenne mobile est préférentiellement montée sur le fond étanche, par exemple à l'aide d'un mât centré sur ce fond étanche. Dans ce cas de figure, en étant articulée en son centre pour pouvoir pivoter selon des axes transversal et vertical avec des amplitudes données, l'antenne laisse latéralement de part et d'autre de celle-ci des espaces qui étaient jusqu'à présent inexploités, et que le l'invention se propose de mettre à profit pour y créer localement des extensions de cockpit dans lesquelles les équipements peuvent être logés.

Enfin, l'invention a également pour objet un aéronef comprenant une partie avant du type de celle définie ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'une partie avant d'aéronef destinée à intégrer un fond étanche selon la présente invention ;
- la figure 2 représente une vue schématique de dessus de la partie avant d'aéronef, avec le fond étanche avant conformé selon le principe de l'invention ;
- la figure 3 représente une vue schématique en coupe prise le long de la ligne III-III de la figure 2 ;
- la figure 4 représente une vue similaire à celle de la figure 2, avec le fond étanche se présentant sous la forme d'un premier mode de réalisation préféré de l'invention ;
- les figures 5 à 7 sont des vues en perspective du fond étanche montré sur la figure 4, selon différents angles de vue ;
- la figure 8 est une vue de côté du fond étanche montré sur les figures 4 à 7, montrant l'excroissance formée du côté zone de radôme par la structure de fond délimitant le renfoncement logeant l'équipement de cockpit ;
- la figure 9 représente une vue similaire à celle de la figure 8, avec l'une des pédales du système de palonnier de commande représentée dans deux positions extrêmes opposées de commande ;
- les figures 10 et 11 sont des vues en perspective d'un fond étanche selon un second mode de réalisation préféré de l'invention ;
- la figure 12 est une vue de côté du fond étanche montré sur les figures 10 et 11, montrant l'excroissance formée du côté zone de radôme par la structure de fond délimitant le renfoncement logeant l'équipement de cockpit ;
- la figure 13 représente une vue similaire à celle de la figure 12, avec l'une des pédales du système de palonnier de commande représentée dans deux positions extrêmes opposées de commande ; et
- la figure 14 schématise un procédé de fabrication du fond étanche montré sur les figures 10 à 13.

### EXPOSÉ DÉTAILLÉ DE MODES DE RÉALISATION PRÉFÉRÉS

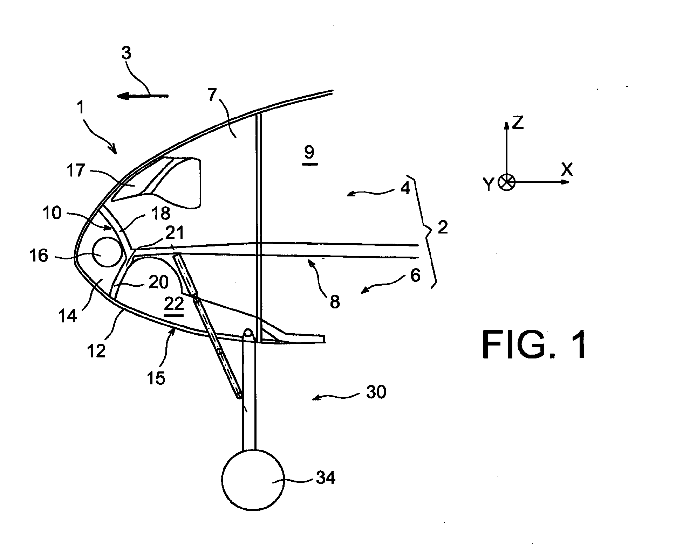

En référence à la figure 1, il est représenté une partie avant d'aéronef 1 ou pointe avant, destinée à intégrer un fond étanche selon la présente invention.

Dans toute la description qui va suivre, par convention, on appelle X la direction longitudinale de l'aéronef, Y la direction orientée transversalement par rapport à celui-ci, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par les turboréacteurs, cette direction étant représentée schématiquement par la flèche 3.

La partie avant 1 comprend tout d'abord, dans sa partie la plus arrière, une zone pressurisée 2 au sein de laquelle se trouve un plancher de séparation 8 entre un compartiment pressurisé supérieur 4 généralement dédié au transport de personnes et dit « zone cabine », et un compartiment pressurisé sous plancher 6 habituellement dédié à l'entreposage de matériels techniques propres à l'aéronef et/ou à l'entreposage de la charge marchande. Plus précisément, le compartiment pressurisé supérieur 4 comprend généralement, de l'avant vers l'arrière, le cockpit 7 de l'aéronef suivi de la cabine passagers 9. D'autre part, le compartiment pressurisé sous plancher 6 comprend généralement, de l'avant vers l'arrière, une zone dite soute technique dédiée à l'entreposage de matériels techniques propres à l'aéronef, suivie d'une zone dite soute cargo dédiée à l'entreposage de la charge marchande.

La zone pressurisée 2 est délimitée vers l'avant par un fond étanche avant 10, qui définit avec la pointe extrême avant 12 du fuselage 15, une zone de radôme non pressurisée 14 servant au logement d'une antenne mobile 16 montrée schématiquement. Le fond étanche 10 prend en section la forme globale d'un V ouvert vers l'avant, dont les extrémités sont fixées au fuselage 15, et dont la pointe orientée vers l'arrière est fixée à l'extrémité avant du plancher 8, ou à proximité. La partie haute 18 du fond étanche 10 délimite le cockpit vers l'avant, et présente éventuellement une légère courbure vers l'avant afin de se fixer sous le pare-brise 17. Sa partie basse constitue quant à elle d'une part une cloison avant 20 d'une case de train d'atterrissage non pressurisée 22, et d'autre part un panneau 21 de délimitation du compartiment pressurisé sous plancher 6, qui chemine en partie au-dessus de la case de train 22.

Ici, la case de train avant est effectivement prévue pour loger un train d'atterrissage avant 30, dans un état rentré de celui-ci, différent de l'état sorti montré schématiquement sur la figure 1. Dans l'état rentré, la roue 34 est censée être au plus près de la cloison avant 20 du fond étanche.

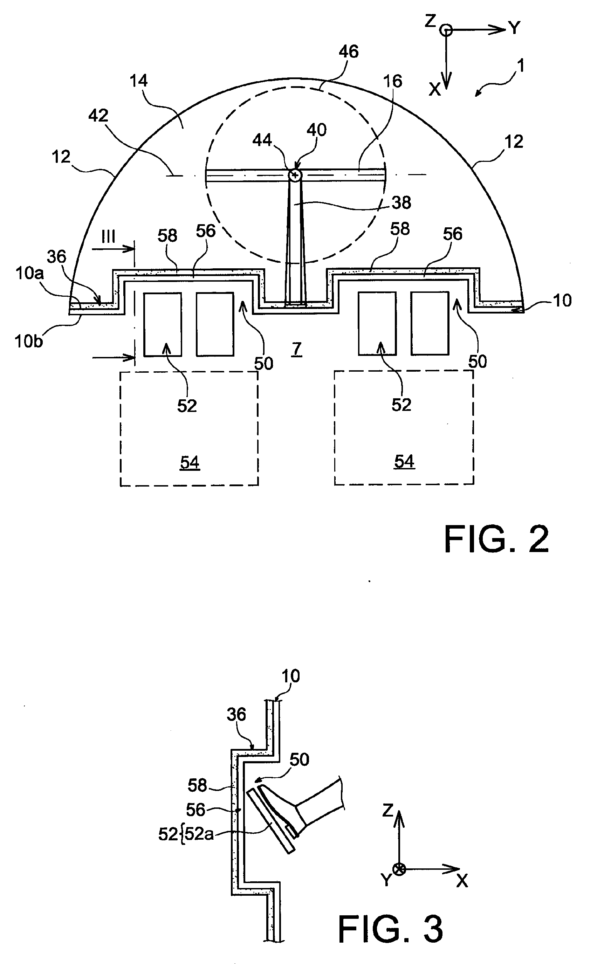

En référence à présent aux figures 2 et 3, il est représenté le fond étanche 10 selon le principe de l'invention. Le fond 10 présente un premier côté 10a orienté vers la zone de radôme 14, ainsi qu'un second côté 10b opposé au premier, orienté vers le cockpit 7. Le premier côté 10a est recouvert en grande partie ou en totalité par un bouclier de protection 36, qui a pour rôle de renforcer la structure du fond étanche pour répondre au risque dit de « choc à l'oiseau ». Le bouclier 36 consiste donc à renforcer structuralement le fond étanche avant ainsi que de le protéger par un élément relativement épais qui vient en surépaisseur de celui-ci. Cet élément est généralement formé à l'aide d'un panneau sandwich épais, par exemple de l'ordre de 100mm. Il consiste à absorber le choc en répartissant l'énergie sur une surface suffisante, ceci pour que le fond étanche qui le supporte ne reçoive pas un pic de charge supérieur à ses capacités de résistance.

Le fond étanche 10 porte l'antenne 16, via un mât 38 dont une extrémité avant supporte un dispositif d'articulation 40 de l'antenne, et dont une extrémité arrière est montée fixement sur le premier côté 10a du fond, et/ou sur le bouclier de protection. Ici, le mât est monté centré sur le fond étanche 10 dans la direction de l'axe transversal Y. De même, l'antenne 16 est montée centrée sur le dispositif d'articulation 40, au centre de la zone de radôme 14, pour pouvoir pivoter selon des axes transversal 42 et vertical 44 avec des amplitudes données. Habituellement, l'amplitude de rotation selon l'axe vertical 44 est de l'ordre de +90° à -90° par rapport à une position de référence dans laquelle l'antenne 16, généralement de périphérie circulaire et de préférence sensiblement plane, se trouve agencée dans un plan transversal YZ comme schématisé sur la figure 2. En outre, l'amplitude de rotation selon l'axe transversal 42 défini par le dispositif d'articulation 40 est de l'ordre de +45° à -45° par rapport à la position de référence. Ainsi, l'antenne 16 peut être matérialisée par une sphère 46 reflétant son débattement.

Comme cela est visible sur la figure 2, l'antenne 16 laisse latéralement de part et d'autre de celle-ci, dans la zone de radôme 14, des espaces qui étaient jusqu'à présent inexploités. L'une des particularités de l'invention est de mettre à profit ces espaces pour y créer localement des extensions de cockpit dans lesquelles des équipements peuvent être logés.

Pour ce faire, le second côté 10b du fond 10 présente au moins un renfoncement 50 destiné à recevoir au moins un équipement de cockpit, ici un système de palonnier de commande 52. Dans la configuration représentée sur la figure 2, il est prévu deux renfoncements 50 situés en regard respectivement de deux sièges de cockpit 54, à savoir le siège du pilote et le siège du copilote.

Chaque renfoncement 50 est en partie délimité par une structure de fond 56 formant excroissance sur le premier côté 10b, dans la zone de radôme. Ce sont donc ces excroissances 56 qui occupent en partie les espaces inexploités de la zone 14, ainsi que les portions du bouclier de protection 36 recouvrant ces excroissances, et formant elles-mêmes des excroissances 58 dans la zone de radôme 14. Les excroissances 56, 58 sont donc superposées selon la direction longitudinale X, et font saillie de part et d'autre du mât 38 du fond étanche 10 dans la zone de radôme 14 non pressurisée. Ces excroissances peuvent en partie se situer au droit de la sphère de radar 46, dans la direction longitudinale X.

La figure 3 représente une pédale 52a du système de palonnier 52, qui peut adopter au moins une position de commande dans laquelle elle est au moins partiellement introduite dans le renfoncement 50. Cela témoigne du positionnement avancé des systèmes de palonnier 52 par rapport à leur position habituelle dans le cockpit, cette position avancée permettant de translater vers l'avant de nombreux autres équipements de cockpit, qui contribuent ainsi à réduire la longueur de ce dernier.

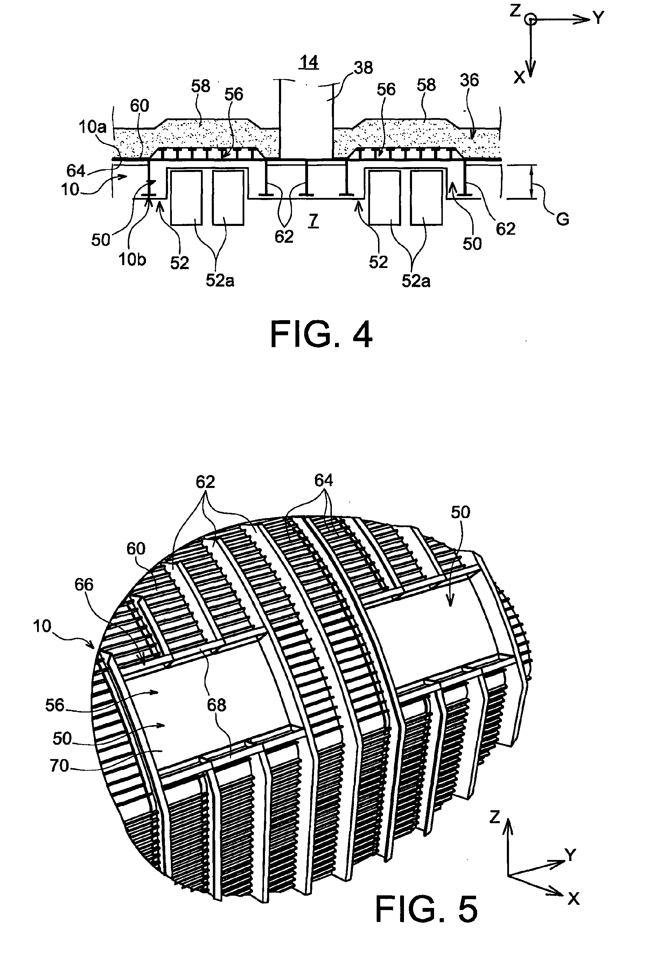

En référence à présent aux figures 5 à 9, il est représenté un premier mode de réalisation préféré de l'invention.

Le fond étanche 10 présente une peau 60 s'étendant sur toute la surface de ce fond, donc adopte une section en forme générale de V ouvert vers l'avant. Au niveau du second côté, la peau est équipée de raidisseurs, parmi lesquels des raidisseurs 62 s'étendant selon la direction de la hauteur, et des raidisseurs 64 s'étendant selon la direction transversale. Les raidisseurs verticaux 62 cheminent de bas en haut sur la peau 60, en étant rapportés directement sur celle-ci, par boulonnage, soudage ou toute autre technique réputée appropriée. De préférence, les raidisseurs transversaux 64 de plus petite hauteur sont interrompus par le passage des raidisseurs verticaux 62, et de préférence formés dans la masse de la peau 60.

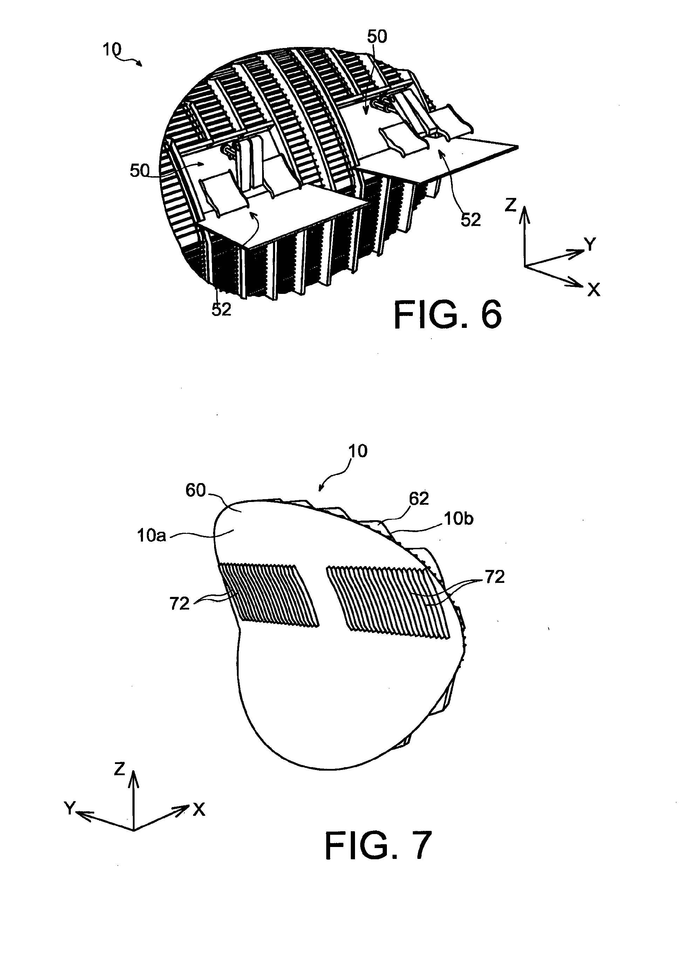

Dans ce premier mode de réalisation préféré, chaque renfoncement 50 est formé au moins en partie dans la hauteur des raidisseurs verticaux 62. Pour ce faire, un ou plusieurs de ces raidisseurs 62 sont interrompus, par exemple deux d'entre eux directement consécutifs, comme cela est montré sur la figure 5. Chaque renfoncement 50 est alors défini par une structure latérale 66 et la structure de fond 56. La structure latérale présente par exemple deux tronçons opposés de raidisseurs 62, reliés entre eux par deux longerons transversaux 68 à partir desquels s'étendent, extérieurement au renfoncement, les raidisseurs interrompus 62. Les longerons 68, plaqués contre la peau 60 tout comme les raidisseurs 62, présentent ainsi une hauteur identique à celle de ces raidisseurs 62, cette hauteur correspondant alors à la profondeur du renfoncement 50. La surface de fond 70 de ce dernier est en effet définie par la peau 60 faisant partie intégrante de la structure de fond 56 précitée. A cet égard, il est indiqué que dans chaque renfoncement 50 de forme sensiblement carrée ou rectangulaire, la peau 60 est épurée des raidisseurs transversaux 64. Cela augmente la profondeur de renfoncement, et permet d'avancer les systèmes de palonnier 52 représentés sur la figure 6 d'une valeur importante par rapport à la position occupée antérieurement derrière les raidisseurs 62, le gain d'espace étant schématisé par la cote « G » sur la figure 4.

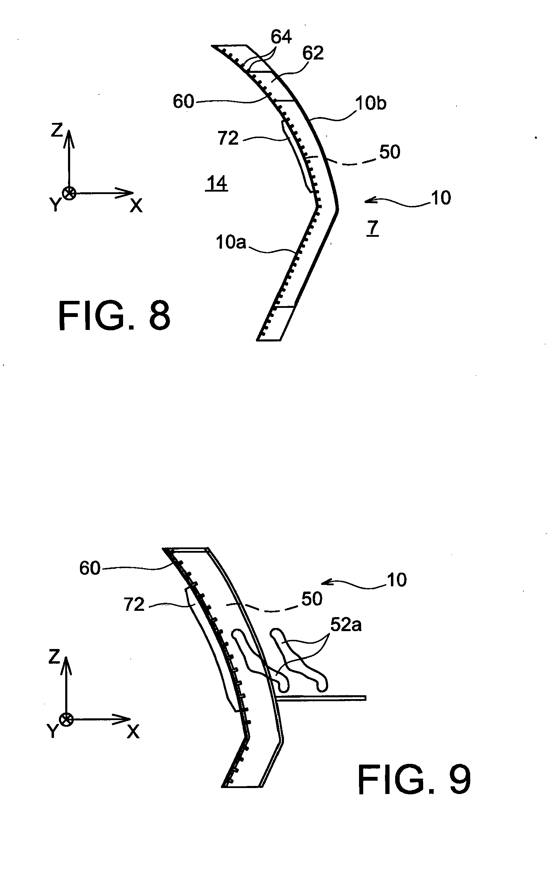

En référence à présent aux figures 7 et 8, le fond étanche avant 10 est par ailleurs équipé au niveau du premier côté 10a de raidisseurs additionnels 72, qui sont montés sur la peau 60 au droit de la partie délimitant la surface de fond de chaque renfoncement. Ces raidisseurs additionnels 72 sont de préférence orientés dans le sens de la hauteur, et balayent donc une surface correspondant aux deux surfaces de fond des renfoncements 50. Les raidisseurs 72 sont de préférence les seuls raidisseurs équipant cette surface de la peau 60, et forment une structure dite à maille inversée en raison de leur localisation sur la surface de la peau opposée à celle où sont plaqués les raidisseurs principaux 62, 64.

Dans ce mode de réalisation où les raidisseurs additionnels 72 font partie intégrante de la structure de fond des renfoncements, seuls ces raidisseurs 72 font saillie dans la zone de radôme 14, comme cela est le mieux visible sur la figure 7.

Les éléments constitutifs du fond étanche 10 sont de préférence métalliques, ou réalisés en matériaux composite.

Chaque renfoncement 50 s'étend par ailleurs à proximité de la ligne d'inflexion entre les deux parties haute et basse du fond étanche, dans le but de pouvoir y loger le système de palonnier agencé à cet endroit. L'étendue d'un renfoncement 50 peut être de l'ordre de 10 à 15% de la superficie totale du fond étanche.

En référence à la figure 9, il est représenté l'une des deux pédales 52a du système de palonnier, dans deux positions extrêmes opposées de commande. Au moins dans la position la plus avant, la pédale 52a pénètre au moins partiellement dans son renfoncement associé 50, pour un gain d'encombrement autorisé par l'extension ponctuelle du cockpit dans la zone de radôme.

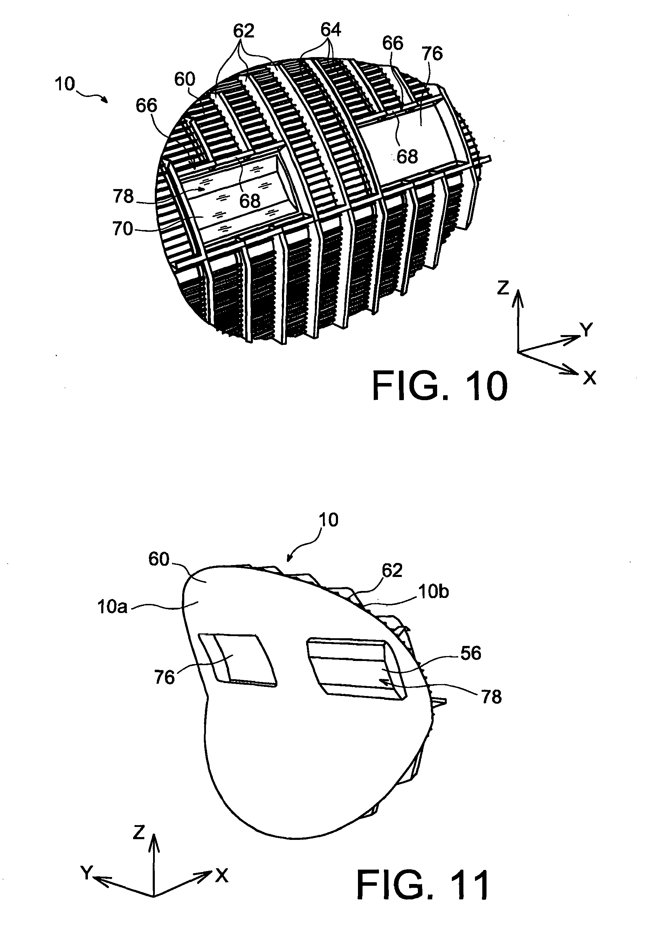

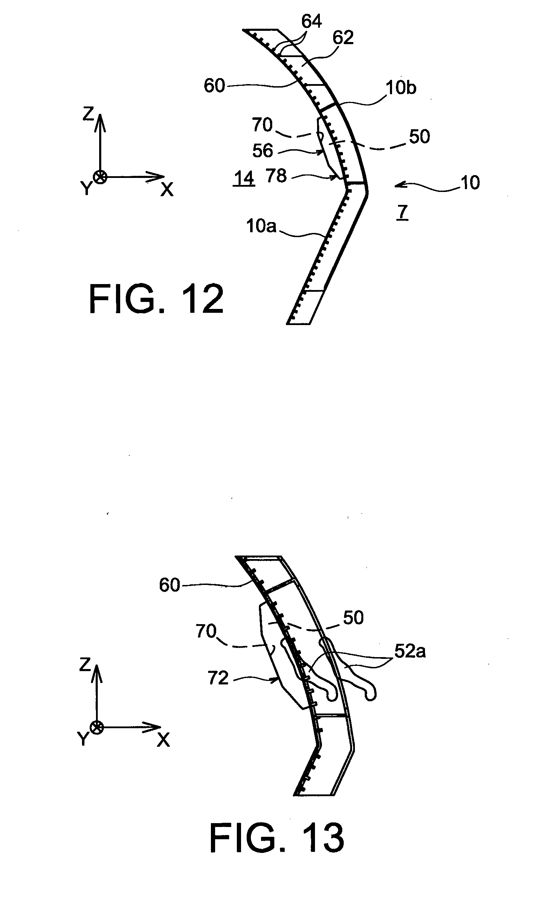

En référence à présent aux figures 10 à 14, il est représenté un second mode de réalisation préféré de l'invention. Ce second mode diffère du premier en ce que la portion de peau délimitée intérieurement par la structure latérale 66 est retirée, de manière à former une trouée 76 au sein de cette même peau. La trouée loge un module rapporté 78 en forme de bac, dont le fond constitue la structure de fond 56 du renfoncement, éventuellement équipée de raidisseurs additionnels. Avec cette configuration, la structure de fond 56 définit une surface de fond 70 qui est au moins en partie décalée de la peau 60 du fond étanche en direction du premier côté 10a, comme cela est le mieux visible sur la figure 12. La profondeur totale du renfoncement 50 est donc augmentée, et le gain de place avantageusement accentué, comme en témoigne la figure 13 sur laquelle est représentée l'une des deux pédales 52a du système de palonnier, dans deux positions extrêmes opposées de commande. Au moins dans la position la plus avant, la pédale 52a pénètre au moins partiellement dans son renfoncement associé 50, et peut même au moins en partie dépasser la peau 60 grâce à la trouée pratiquée dans celle-ci.

Le module 78 peut être monté sur le fond étanche de plusieurs façons différentes. Soit à la manière d'un hublot, en présentant une collerette à sa périphérie destinée à écraser un joint contre une collerette opposée, par exemple prévue sur la structure latérale 66, soit de manière conventionnelle par des boulons.

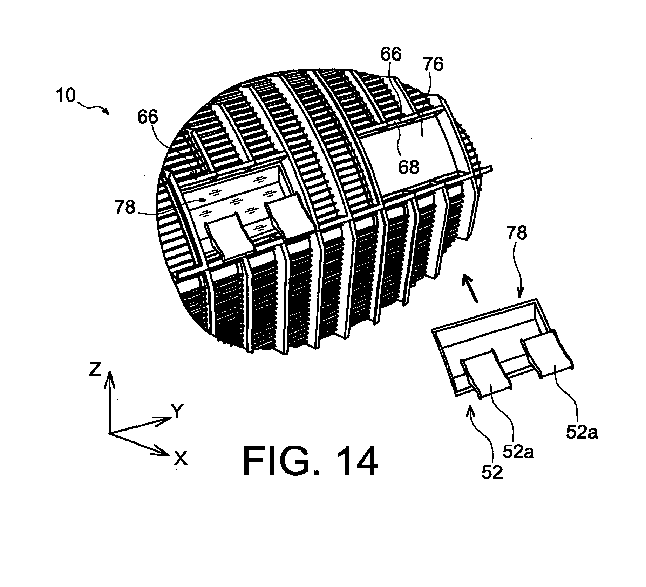

L'une des particularités de l'invention réside également dans la possibilité de pré-équiper le module 78 du système de palonnier 52, et de monter l'ensemble dans la trouée, comme cela est schématisé sur la figure 14. Par conséquent, tant que cet ensemble constitué par le module portant le système de palonnier n'est pas monté sur le fond 10, la trouée 76 peut servir de passage d'homme pour l'accès aux opérateurs lors de la fabrication et/ou lors d'opérations de maintenance. Enfin, le montage simultané du module et du système de palonnier permet de réduire le temps de fabrication de la pointe avant de l'aéronef.

Bien entendu, diverses modifications peuvent être apportées par l'homme du métier à l'invention qui vient d'être décrite, uniquement à titre d'exemples non limitatifs.

## Revendications

1. Fond étanche avant (10) pour aéronef présentant un premier côté (10a) orienté vers une zone de radôme (14) destinée à loger une antenne mobile (16), ainsi qu'un second côté (10b) opposé au premier côté et orienté vers un cockpit (7) de l'aéronef, **caractérisé en ce que** ledit second côté présente au moins un renfoncement (50) destiné à recevoir au moins un équipement de cockpit (52), chaque renfoncement étant en partie délimité par une structure de fond (56) formant excroissance sur ledit premier côté (10a).

2. Fond étanche selon la revendication 1, **caractérisé en ce qu'**il comprend une peau (60) ainsi qu'une pluralité de raidisseurs (62) équipant ladite peau au niveau du second côté (10b), et **en ce que** ledit renfoncement (50) est au moins en partie formé dans la hauteur des raidisseurs (62).

3. Fond étanche selon la revendication 2, **caractérisé en ce que** ledit renfoncement (50) présente une structure latérale (66) à partir de laquelle s'étendent, extérieurement au renfoncement (50), une pluralité desdits raidisseurs (62).

4. Fond étanche selon l'une quelconque des revendications précédentes, **caractérisé en ce que** ladite structure de fond (56) présente des raidisseurs additionnels (72) au niveau dudit premier côté (10a).

5. Fond étanche selon la revendication 4, **caractérisé en ce que** lesdits raidisseurs additionnels (72) sont agencés sur une peau (60) dudit fond étanche (10), lesdits raidisseurs additionnels étant préférentiellement les seuls raidisseurs équipant la peau au niveau du premier côté (10a).

6. Fond étanche selon l'une quelconque des revendications précédentes, **caractérisé en ce que** ladite structure de fond (56) définit une surface de fond (70) avec une peau (60) du fond étanche (10).

7. Fond étanche selon l'une quelconque des revendications 1 à 5, **caractérisé en ce qu'**il présente une trouée (76) dans laquelle est logé un module (78) formant au moins en partie ladite structure de fond (56) du renfoncement.

8. Fond étanche selon la revendication 7, **caractérisé en ce que** ledit module (78) définit une surface de fond (70) au moins en partie décalée d'une peau (60) de fond étanche, en direction dudit premier côté (10a).

9. Fond étanche selon la revendication 7 ou la revendication 8, **caractérisé en ce que** ledit module (78) porte ledit équipement de cockpit (52).

10. Fond étanche selon l'une quelconque des revendications précédentes, **caractérisé en ce que** ledit équipement de cockpit (52) est un système de palonnier de commande.

11. Fond étanche selon l'une quelconque des revendications précédentes, **caractérisé en ce qu'**il présente deux renfoncements (50) destinés à se situer en regard respectivement de deux sièges de cockpit (54).

12. Procédé de fabrication d'un fond étanche avant d'aéronef selon la revendication 9, **caractérisé en ce qu'**au moins une partie dudit équipement de cockpit (52) est assemblé sur ledit module (78) avant que ce dernier soit logé dans ladite trouée (76).

13. Partie avant d'aéronef (1) comprenant un fond étanche avant (10) selon l'une quelconque des revendications 1 à 11, celui-ci ayant son premier côté (10a) recouvert par un bouclier de protection (36), présentant de préférence également une excroissance (58) superposée à l'excroissance définie par la structure de fond (56) du renfoncement.

14. Partie avant d'aéronef selon la revendication 13, **caractérisée en ce que** ledit fond étanche (10) prend en section la forme globale d'un V ouvert vers l'avant, dont les extrémités sont de préférence fixées au fuselage (15), et dont la pointe orientée vers l'arrière est fixée à une extrémité avant d'un plancher (8) de cockpit.

15. Partie avant d'aéronef selon la revendication 13 ou la revendication 14, **caractérisée en ce que** ladite antenne mobile (16) est montée le fond étanche (10).

## Patentansprüche

1. Vorderer dichter Boden (10) für ein Luftfahrzeug, der eine zu einem Radombereich (14), der dazu bestimmt ist, eine mobile Antenne (16) aufzunehmen, gerichtete erste Seite (10a) sowie eine der ersten Seite gegenüberliegende und zu einem Cockpit (7) des Luftfahrzeugs gerichtete zweite Seite (10b) aufweist, **dadurch gekennzeichnet, dass** die zweite Seite mindestens eine Vertiefung (50) aufweist, die dazu bestimmt ist, mindestens eine Cockpitausstattung (52) aufzunehmen, wobei jede Vertiefung zum Teil von einer Bodenstruktur (56) begrenzt wird, die eine Ausstülpung auf der ersten Seite (10a) bildet.

2. Dichter Boden nach Anspruch 1, **dadurch gekennzeichnet, dass** er eine Haut (60) sowie eine Vielzahl von Versteifungen (62) enthält, mit denen die Haut im Bereich der zweiten Seite (10b) ausgestattet ist, und dass die Vertiefung (50) zumindest zum Teil in der Höhe der Versteifungen (62) geformt ist.

3. Dichter Boden nach Anspruch 2, **dadurch gekennzeichnet, dass** die Vertiefung (50) eine seitliche Struktur (66) aufweist, von der ausgehend sich außerhalb der Vertiefung (50) eine Vielzahl der Versteifungen (62) erstreckt.

4. Dichter Boden nach einem der vorhergehenden Ansprüche, **dadurch gekennzeichnet, dass** die Bodenstruktur (56) zusätzliche Versteifungen (72) im Bereich der ersten Seite (10a) aufweist.

5. Dichter Boden nach Anspruch 4, **dadurch gekennzeichnet, dass** die zusätzlichen Versteifungen (72) auf einer Haut (60) des dichten Bodens (10) angeordnet sind, wobei die zusätzlichen Versteifungen vorzugsweise die einzigen Versteifungen sind, mit denen die Haut im Bereich der ersten Seite (10a) ausgestattet ist.

6. Dichter Boden nach einem der vorhergehenden Ansprüche, **dadurch gekennzeichnet, dass** die Bodenstruktur (56) mit einer Haut (60) des dichten Bodens (10) eine Bodenfläche (70) definiert.

7. Dichter Boden nach einem der Ansprüche 1 bis 5, **dadurch gekennzeichnet, dass** er einen Durchbruch (76) aufweist, in dem ein Modul (78) untergebracht ist, das mindestens zum Teil die Bodenstruktur (56) der Vertiefung formt.

8. Dichter Boden nach Anspruch 7, **dadurch gekennzeichnet, dass** das Modul (78) eine Bodenfläche (70) definiert, die zumindest zum Teil zu einer dichten Bodenhaut (60) in Richtung der ersten Seite (10a) versetzt ist.

9. Dichter Boden nach Anspruch 7 oder Anspruch 8, **dadurch gekennzeichnet, dass** das Modul (78) die Cockpitausstattung (52) trägt.

10. Dichter Boden nach einem der vorhergehenden Ansprüche, **dadurch gekennzeichnet, dass** die Cockpitausstattung (52) ein Steuerhebelsystem ist.

11. Dichter Boden nach einem der vorhergehenden Ansprüche, **dadurch gekennzeichnet, dass** er zwei Vertiefungen (50) aufweist, die dazu bestimmt sind, sich gegenüber von zwei Cockpitsitzen (54) zu befinden.

12. Verfahren zur Herstellung einer vorderen dichten Boden eines Luftfahrzeugs nach Anspruch 9, **dadurch gekennzeichnet, dass** mindestens ein Teil der Cockpitausstattung (52) auf das Modul (78) montiert wird, ehe letzteres im Durchbruch (76) untergebracht wird.

13. Luftfahrzeug-Vorderteil (1), das einen vorderen dichten Boden (10) nach einem der Ansprüche 1 bis 11 aufweist, dessen erste Seite (10a) mit einem Schutzschild (36) bedeckt ist, der vorzugsweise ebenfalls eine Ausstülpung (58) aufweist, die die von der Bodenstruktur (56) der Vertiefung definierte Ausstülpung überlagert.

14. Luftfahrzeug-Vorderteil nach Anspruch 13, **dadurch gekennzeichnet, dass** der dichte Boden (10) im Schnitt die allgemeine Form eines nach vorne offenen V annimmt, dessen Enden vorzugsweise am Rumpf (15) befestigt sind, und dessen nach hinten gerichtete Spitze an einem vorderen Ende eines Cockpitfußbodens (8) befestigt ist.

15. Luftfahrzeug-Vorderteil nach Anspruch 13 oder Anspruch 14, **dadurch gekennzeichnet, dass** die mobile Antenne (16) auf den dichten Boden (10) montiert ist.

## Claims

1. Leaktight nose cone backplate (10) for an aircraft having a first side (10a) oriented towards a radome zone (14) in which a mobile antenna (16) is intended to be housed, and a second side (10b) opposite the first side and oriented towards a cockpit (7) of the aircraft, **characterised in that** said second side has at least one recess (50) inside which at least one piece of cockpit equipment (52) is intended to be located, each recess being partly delimited by a backplate structure (56) forming a protrusion from said first side (10a).

2. Leaktight backplate according to claim 1, **characterised in that** it comprises a skin (60) and a plurality of stiffeners (62) fitted on said skin at the second side (10b), and **in that** said recess (50) is at least partly formed in the height of the stiffeners (62).

3. Leaktight backplate according to claim 2, **characterised in that** said recess (50) has a lateral structure (66) from which a plurality of said stiffeners (62), extend, outside the recess (50).

4. Leaktight backplate according to any one of the previous claims, **characterised in that** said backplate structure (56) has additional stiffeners (72) at said first side (10a).

5. Leaktight backplate according to claim 4, **characterised in that** said additional stiffeners (72) are located on a skin (60) of said leaktight backplate (10), said additional stiffeners preferably being the only stiffeners fitted on the skin at the first side (10a).

6. Leaktight backplate according to any one of the previous claims, **characterised in that** said backplate structure (56) defines a bottom surface (70) with a skin (60) of the leaktight backplate (10).

7. Leaktight backplate according to any one of claims 1 to 5, **characterised in that** it has a gap (76) inside which a module (78) is housed at least partly forming said backplate structure (56) of the recess.

8. Leaktight backplate according to claim 7, **characterised in that** said module (78) defines a back surface (70) at least partly offset from a skin (60) of the leaktight backplate, and facing said first side (10a).

9. Leaktight backplate according to claim 7 or claim 8, **characterised in that** said module (78) houses said cockpit equipment (52).

10. Leaktight backplate according to any one of the previous claims, **characterised in that** said cockpit equipment (52) is a manual or electronic rudder bar system.

11. Leaktight backplate according to any one of the previous claims, **characterised in that** it has two recesses (50) facing the two cockpit seats (54).

12. Method of manufacturing an aircraft leaktight nose backplate according to claim 9, **characterised in that** at least part of said cockpit equipment (52) is assembled on said module (78) before said module is inserted in said gap (76) .

13. Forward part of an aircraft (1) comprising a leaktight nose cone backplate (10) according to any one of claims 1 to 11, the first side (10a) of which is covered by a protective shield (36), preferably also having a protrusion (58) superposed on the protrusion defined by the backplate structure (56) of the recess.

14. Forward part of an aircraft according to claim 13, **characterised in that** said leaktight backplate (10) has a globally V-shaped section open forwards, the ends of which are preferably fixed to the fuselage (15), and the tip of which oriented in the aft direction is fixed to a forward end of a cockpit deck (8).

15. Forward part of an aircraft according to claim 13 or claim 14, **characterised in that** said mobile antenna (16) is mounted on the leaktight backplate (10).
